# FASCICULE DE BREVET EUROPEEN

(11) **EP 3 707 797 B1**
(45) Date de publication et mention de la délivrance du brevet: **01.12.2021**
(21) Numéro de dépôt: 18785660.4
(22) Date de dépôt: 18.10.2018
(51) Int. Cl.: H02H 3/32, H02H 3/34

(54) **DISPOSITIF DE PROTECTION DIFFÉRENTIELLE UTILISANT LA TENSION MOYENNE REDRESSÉE**
DIFFERENTIALSCHUTZVORRICHTUNG UNTER VERWENDUNG VON GLEICHGERICHTETER MITTELSPANNUNG
DIFFERENTIAL PROTECTION DEVICE USING THE RECTIFIED AVERAGE VOLTAGE

(30) Priorité: 07.11.2017 FR 1760425; 30.11.2017 FR 1761389
(43) Date de publication de la demande: 16.09.2020
(73) Titulaire: HAGER-ELECTRO SAS, 67210 Obernai (FR)
(72) Inventeur: JOYEUX, Patrice, 67140 Heiligenstein (FR); DOLISY, Bastien, 67210 Obernai (FR); SCHNEIDER, Michel, 67560 Rosheim (FR)
(74) Mandataire: Cabinet Nuss
(86) Numéro de dépôt international: PCT/EP2018/078504
(87) Numéro de publication internationale: WO 2019/091740

(56) Documents cités:
- WO-A1-2017/093670
- WO-A2-2017/072442
- US-A1- 2004 145 841

## Description

La présente invention concerne les équipements et systèmes de sécurité des biens et des personnes dans le domaine électrique, plus particulièrement les dispositifs de protection de personnes à courant différentiel résiduel (ou DDR), et a pour objet un dispositif de protection différentielle exploitant la tension moyenne redressée.

Les dispositifs de protection différentielle sont couramment intégrés dans des installations électriques domestiques ou tertiaires, en amont ou à l'entrée des diverses arborescences des circuits d'alimentation en place, voir au plus près des récepteurs auxquels ils sont respectivement affectés.

Typiquement, ces installations électriques sont alimentées par un réseau électrique alternatif, et des dispositifs de protection du type précité ont pour but d'assurer principalement la sécurité des personnes en détectant le plus rapidement possible toute fuite éventuelle vers la terre dans un des circuits ou récepteurs à protéger. De telles fuites sont par exemple causées par des contacts directs de sujets avec un conducteur non isolé ou des contacts indirects dus à des défauts de masse. Ces incidents électriques sont susceptibles de générer des accidents, parfois mortels, des détériorations de matériel(s), des départs d'incendie, des dysfonctionnements localisés ou généralisés ou analogues.

La protection différentielle, dans le contexte précité, s'effectue dans la plupart des cas d'une manière assez standardisée.

Pour la détection des courants de défaut alternatifs, les conducteurs du circuit à protéger, ou les conducteurs du réseau ou de la ligne d'alimentation de ce circuit, passent dans un tore de matériau ferromagnétique d'un transformateur dont les conducteurs précités forment le primaire et qui comporte un ou plusieurs enroulement(s) ou bobinage(s) secondaire(s). Le tore joue le rôle d'un concentrateur de flux magnétique. Ainsi en cas de fuite, se traduisant par un déséquilibre des courants d'entrée et de sortie dans les conducteurs des lignes à protéger, le flux créé dans le tore par ce déséquilibre au niveau du primaire, induit dans le bobinage secondaire une tension, constituant un signal de défaut.

Pour la détection des courants de défaut continus ou DC, il est par exemple connu d'exciter à saturation un tore magnétique doux, traversé par les conducteurs de la ligne ou du réseau, par un courant alternatif. Lors de l'apparition d'un courant de défaut DC dans les conducteurs, la symétrie de la saturation (sens positif/sens négatif) est rompue, la dissymétrie temporaire résultante étant proportionnelle au courant de défaut. Cette méthode dite "Fluxgate" peut ensuite prévoir d'exploiter directement le signal de défaut, ou son spectre fréquentiel.

Un autre principe de détection connu consiste à utiliser un transformateur de tension (par exemple un tore) doté d'un primaire (bobinage d'excitation) appliquant une tension fixe et un secondaire (bobinage de mesure) ayant un rapport de transformation variable, la valeur de ce dernier dépendant de l'intensité du courant de défaut qui traverse le tore et qui résulte de la somme algébrique des courants entrant et sortant.

Dans les deux types de détection de courants de défaut précités (alternatifs et continus), le signal de défaut est utilisé pour commander directement, ou à travers une électronique dédiée (étages de traitement des signaux), un actionneur ou analogue (par exemple de type relais). Ce dernier commande à son tour un mécanisme de déclenchement, de coupure ou d'ouverture associé, ou ceux d'autres appareils de protection de l'installation.

En lieu et place du tore précité, il peut aussi être prévu, en accord avec d'autres variantes connues de l'état de la technique, de mettre en œuvre d'autres types de capteurs ou de détecteurs aptes et destinés à générer un signal de défaut lorsqu'un défaut différentiel apparaît au niveau du réseau ou de l'installation surveillé(e).

Ces appareils ou dispositifs de protection différentielle peuvent présenter des caractéristiques variables. Ainsi, ils sont différentiables et caractérisés par leur sensibilité propre, qui dépend notamment du type d'installation électrique dans laquelle ils sont utilisés et qu'ils sont destinés à protéger. Par ailleurs, certains de ces appareils ne sont capables de détecter des fuites que pour des courants alternatifs (type AC) ou que pour des courants continus, alors que d'autres, plus complets, offrent des solutions également applicables au courant continu pulsé (types A et F) et lissé (type B).

Par ailleurs, pour les dispositifs ayant la capacité de détecter des courants de défaut alternatifs, la fréquence limite supérieure de détection constitue un autre critère de distinction entre les différents types : fréquences jusqu'à quelques dizaines de Hz : AC ; fréquences jusqu'à 1kHz: type F ; fréquences jusqu'à 1kHz: type B; fréquences jusqu'à 20kHz : type B+.

Concernant plus particulièrement la détection des courants de défauts continus (DC), et notamment leur évaluation pour la détermination de l'occurrence ou non de conditions de déclenchement ou de coupure, plusieurs solutions techniques différentes sont actuellement mises en œuvre, qui toutes présentent des inconvénients notables.

En accord avec une première solution connue, on analyse les pics de courant traversant le tore de mesure pour réaliser le déclenchement sélectif.

En accord avec une seconde solution connue, on mesure la tension du tore et on détecte sa valeur crête, qui est ensuite comparée à une valeur seuil de déclenchement.

Toutefois, ces solutions connues ne font pas état d'une dynamique importante, et n'affichent pas une linéarité de la fonction de déclenchement en dépendance du courant DC.

La présente invention a pour but de proposer un dispositif de protection différentielle amélioré remédiant aux principales limitations exposées ci-dessus.

Ainsi, l'invention a pour objet un dispositif de protection différentielle permettant la détection de courants de fuite ou de défaut dans une installation électrique alimentée soit par au moins deux conducteurs de phase d'un réseau, soit par au moins un conducteur de phase d'un réseau et par un conducteur de neutre dudit réseau,
ledit dispositif comprenant au moins un module de détection et de commande qui est fonctionnellement actif ou opérationnel pour des fréquences du signal de défaut de 0Hz à quelques dizaines de Hz, ce module étant alimenté par le réseau,
ce module comprenant, d'une part, un tore de mesure en un matériau ferromagnétique traversé par les conducteurs précités, d'autre part, un circuit d'excitation du tore comportant un générateur de signaux alternatifs produisant une porteuse périodique, et, enfin, un enroulement de mesure apte et destiné à générer un signal de défaut résultant de l'apparition d'un défaut différentiel au niveau du réseau, ledit enroulement de mesure étant relié à des circuits de traitement et d'évaluation du signal de défaut et d'émission d'un signal de commande pour un moyen de coupure ou d'ouverture, faisant également partie du dispositif de protection différentielle, les circuits précités formant les composantes d'une chaîne électronique opérationnelle appartenant au module de détection et de commande,
dispositif caractérisé en ce que les circuits de ladite chaîne opérationnelle comprennent au moins, d'une part, un circuit fournissant un signal correspondant à la valeur moyenne redressée du signal de défaut, ou d'un signal dérivé directement dépendant de ce dernier, et, d'autre part, un circuit comparant ledit signal moyen redressé à une valeur seuil prédéterminée ou préréglée et délivrant conditionnellement ou sélectivement un signal de commande du moyen de coupure ou d'ouverture, en fonction du résultat de ladite comparaison.

L'invention sera mieux comprise, grâce à la description ci-après, qui se rapporte à des modes de réalisations préférés, donnés à titre d'exemples non limitatifs, et expliqués avec référence aux dessins schématiques annexés, dans lesquels :
les figures 1 à 3 sont des représentations schématiques de trois variantes de réalisation d'un dispositif de protection différentielle, du type B ou B+, comprenant un module de détection de courant de défaut DC et un module de détection de courant de défaut AC ;
les figures 4 à 6 sont des représentations schématiques partielles illustrant les modules de détection et de commande sensible aux courants de défaut DC (typiquement de 0 Hz à quelques dizaines de Hz) faisant partie des dispositifs des figures 1 à 3 respectivement ;
la figure 7 est une représentation électrique symbolique d'un exemple de circuit de filtrage pouvant faire partie d'un dispositif représenté sur l'une des figures 1 à 3 ;
les figures 8 et 9 sont des représentations graphiques (Courbes : seuil de déclenchement en mA en fonction de la fréquence) illustrant la variation de la sensibilité au déclenchement pour chacun des modules DC et AC (figure 8) et pour un dispositif tel que représenté sur les figures 1 à 3 (figure 9).

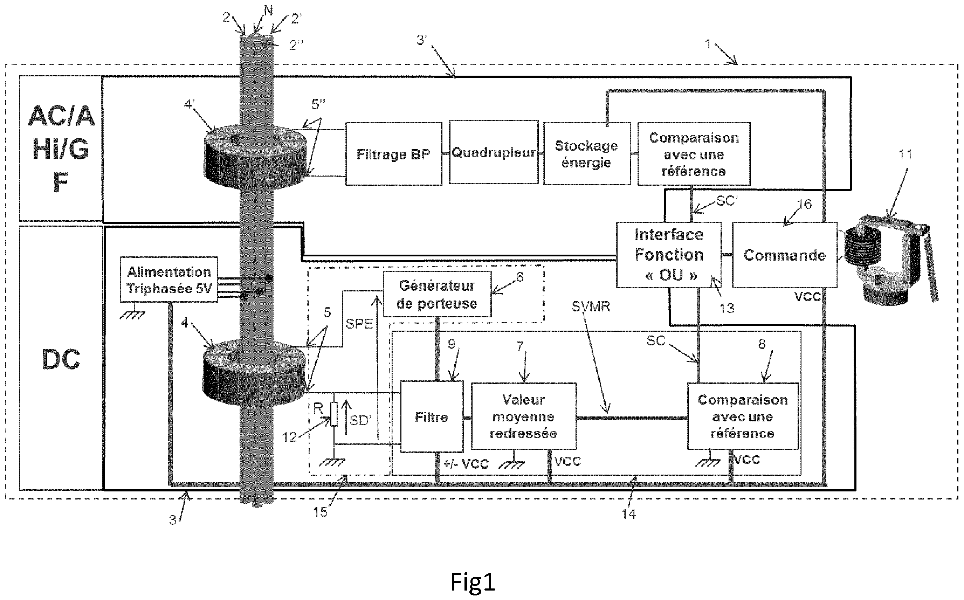

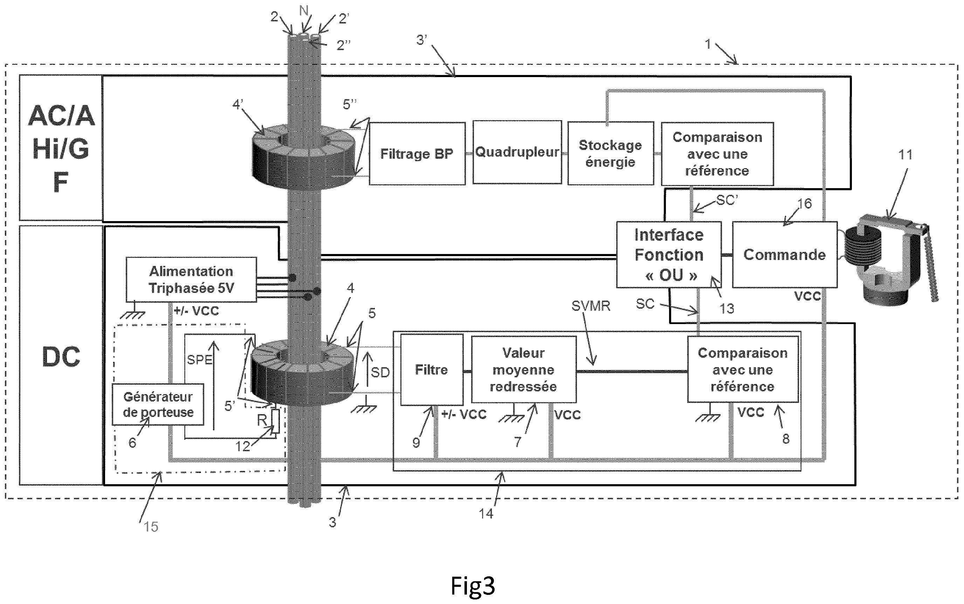

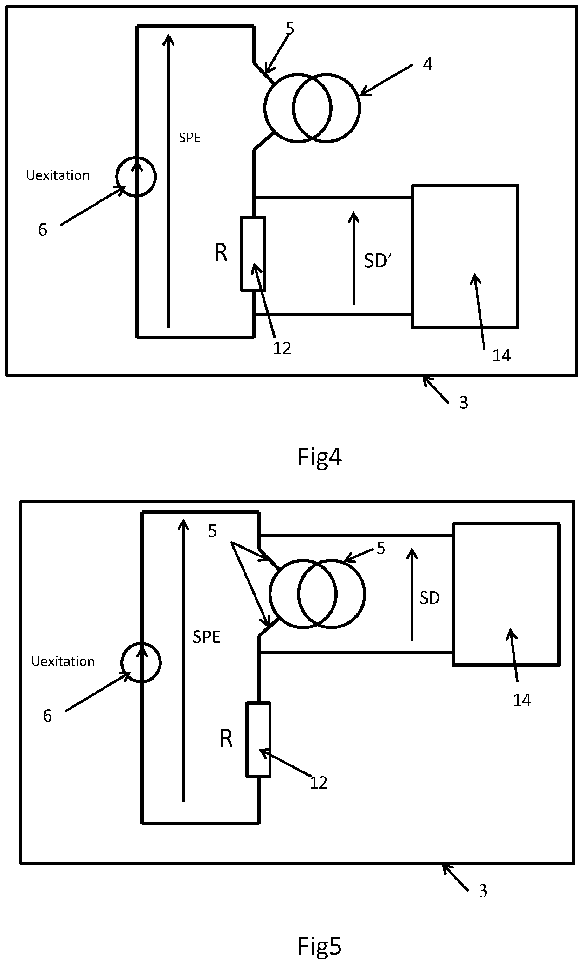

Les figures 1 à 3, et partiellement les figures 4 à 6, montrent un dispositif 1 de protection différentielle permettant la détection de courants de fuite ou de défaut dans une installation électrique alimentée soit par au moins deux conducteurs de phase d'un réseau 2, 2', 2", soit par au moins un conducteur de phase d'un réseau 2, 2', 2" et par un conducteur de neutre N dudit réseau.

Ce dispositif 1 comprend au moins un module 3 de détection et de commande qui est fonctionnellement actif ou opérationnel pour des fréquences du signal de défaut de 0Hz à quelques dizaines de Hz, ce module 3 étant alimenté par le réseau.

Ledit module 3 comprend, d'une part, un tore de mesure 4 en un matériau ferromagnétique traversé par les conducteurs précités 2, 2', 2", N, d'autre part, un circuit d'excitation 15 du tore 4 comportant un générateur de signaux alternatifs 6 produisant une porteuse périodique SPE, et, enfin, un enroulement de mesure 5 apte et destiné à générer un signal de défaut SD résultant de l'apparition d'un défaut différentiel au niveau du réseau, ledit enroulement de mesure 5 étant relié à des circuits 7, 8, 9, 10 de traitement et d'évaluation du signal de défaut SD et d'émission d'un signal de commande SC pour un moyen 11 de coupure ou d'ouverture, faisant également partie du dispositif de protection différentielle 1, les circuits 7 à 10 précités formant les composantes d'une chaîne électronique opérationnelle 14 appartenant au module 3 de détection et de commande.

Le réseau d'alimentation 2, 2ʹ, 2ʺ, N peut être: un réseau triphasé avec neutre 2, 2ʹ, 2ʺ et N ; un réseau triphasé sans neutre 2, 2ʹ et 2ʺ ; un réseau biphasé 2, 2ʹ ou encore un réseau monophasé 2, N.

Conformément à l'invention, les circuits de ladite chaîne opérationnelle 14 comprennent au moins, d'une part un circuit 7 fournissant un signal SVMR correspondant à la valeur moyenne redressée du signal de défaut SD, ou d'un signal dérivé SD' directement dépendant de ce dernier, et, d'autre part, un circuit 8 comparant ledit signal moyen redressé SVMR à une valeur seuil prédéterminée ou préréglée et délivrant conditionnellement ou sélectivement un signal de commande SC du moyen 11 de coupure ou d'ouverture, en fonction du résultat de ladite comparaison.

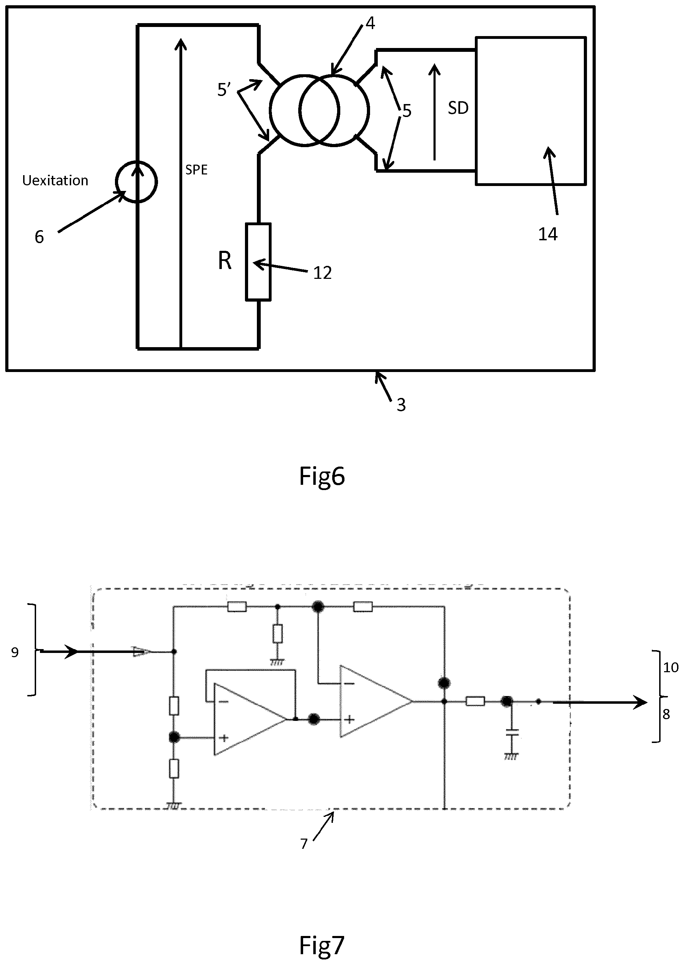

La figure 7 illustre un exemple de réalisation possible d'un circuit redresseur moyenneur 7.

D'autres types de circuits 7, de nature passive, tel qu'un pont de diodes, peuvent également être envisagés.

Grâce aux dispositions techniques particulières indiquées ci-dessus, et simples à mettre en œuvre, permettant l'exploiter la tension moyenne redressée du signal de défaut, l'invention permet :
- de disposer et d'exploiter une image directe du flux (ou de l'induction) magnétique à travers le tore (reflétant sensiblement l'état magnétique de celui-ci) ;
- de linéariser la mesure de la composante continue du courant de défaut, et donc de pouvoir indiquer quantitativement, avec une gradation proportionnelle (série de diodes électroluminescentes), le niveau de courant différentiel mesuré ;
- du fait de l'absence de non linéarité, il est possible de mieux maîtriser les niveaux de déclenchement (suppression de la nécessité d'un réglage).

En accord avec une première caractéristique importante de l'invention, illustrée aux figures 1 à 6, le circuit d'excitation 15 comprend également au moins une résistance 12 montée en série avec le générateur 6 de la porteuse périodique d'excitation SPE, ledit signal d'excitation SPE étant appliqué au tore 4 par le biais soit de l'enroulement de mesure 5 en série avec ladite résistance 12, soit d'un enroulement additionnel 5' distinct, en série avec ladite résistance 12 et formant enroulement primaire par rapport à l'enroulement de mesure 5.

En prévoyant une telle résistance 12, il est possible, en ajustant sa valeur, de réaliser avec un même tore de mesure 4 un module 3 avec une sensibilité de déclenchement variable, par exemple entre 30 mA et 500 mA environ.

Selon une autre caractéristique de l'invention, ressortant des figures 1 à 3, la chaîne opérationnelle 14 du module 3 comprend également un circuit 9 de filtrage, du type passe-bas ou passe-bande, monté en amont du circuit 7 redresseur et moyenneur et configuré pour traiter le signal de défaut SD ou dérivé SD' pour en extraire la composante du signal correspondant à la porteuse d'excitation SPE.

Le circuit de filtrage 9 peut être du type actif (réalisé avec des amplificateurs opérationnels) ou du type passif, et la réalisation pratique de tels circuits est bien connue de l'homme du métier.

La mise en œuvre d'un tel circuit de filtrage 9 permet de maîtriser et de garantir la détection de la composante DC du courant de défaut même en cas de superposition d'une composante AC parasite et/ou interférante (par exemple liée à la fréquence d'un onduleur ou d'une alimentation à découpage). Il est ainsi possible d'éviter des déclenchements intempestifs du dispositif 1 (non lié à un courant de défaut à composante DC critique), tout en garantissant la sécurité des biens et des personnes, c'est-à-dire sans affecter la sensibilité du module 3. En outre, une surmodulation du signal à traiter est évitée.

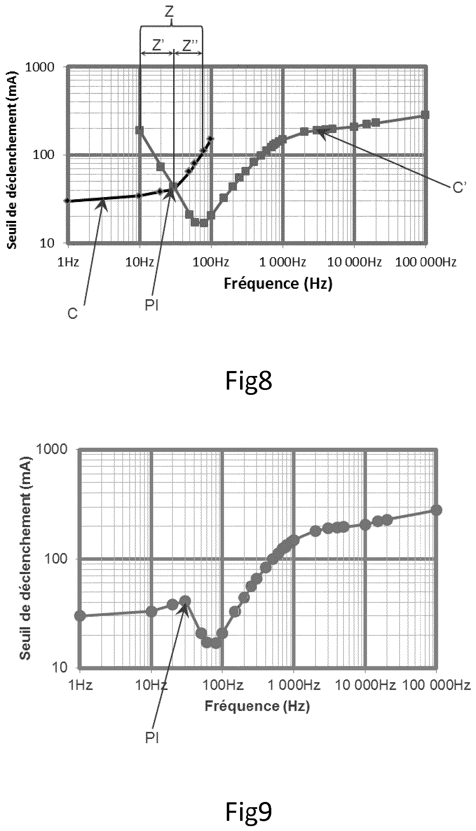

De plus, ce circuit de filtrage 9 permet de garantir que la bande passante du module DC 3 soit toujours supérieure à la bande passante du module AC 3' (par exemple du type F), au-delà du point PI (cf. figure 8).

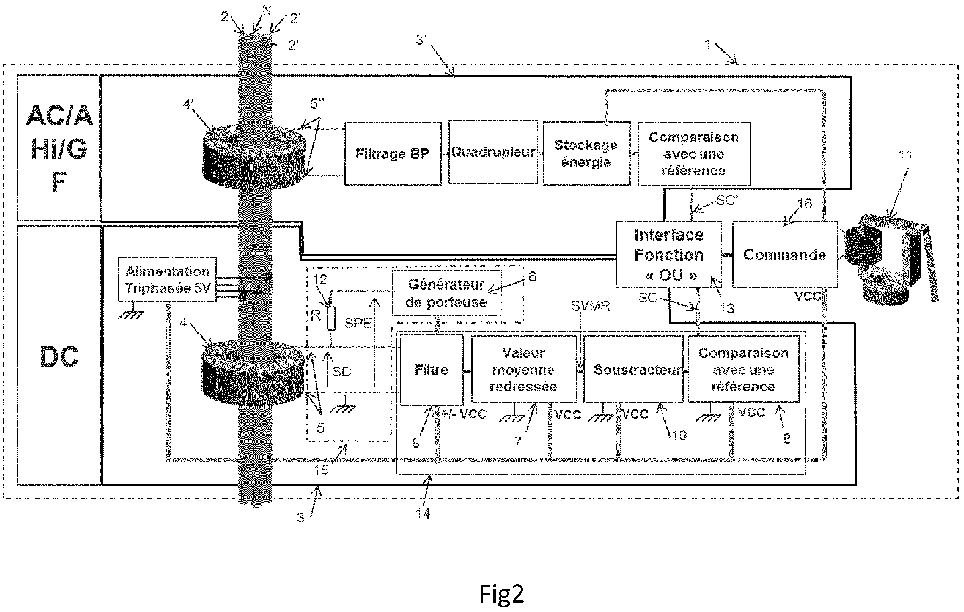

Conformément à un premier mode de réalisation illustré sur les figures 2 et 5, lorsque la chaîne opérationnelle 14 du module 3 de détection et de commande est reliée directement aux bornes de l'enroulement de mesure 5 et que ledit enroulement de mesure 5 sert à l'application du signal d'excitation périodique SPE par l'intermédiaire d'une résistance en série 12, ladite chaîne 14 comprend également un circuit soustracteur 10 monté entre le circuit 7 redresseur et moyenneur, d'une part, et le circuit 8 comparateur et fournisseur conditionnel du signal de commande SC, d'autre part.

Conformément à un second mode de réalisation de l'invention, ressortant des figures 1, 3, 4 et 6, la chaîne opérationnelle 14 du module 3 de détection et de commande est alimentée par un signal dérivé SD' qui est prélevé aux bornes de la résistance 12 montée en série avec l'enroulement de mesure 5.

Dans ce second mode de réalisation, il est possible de s'affranchir du circuit soustracteur 10 (construction plus simple, plus compacte et moins onéreuse).

Afin de fournir un dispositif 1 opérationnel sur une plage de fréquences plus étendue, intégrant également les courants de défaut de fréquence plus élevée, le dispositif 1 peut comprendre également un second module 3' de détection et de commande qui est fonctionnellement actif ou opérationnel pour des fréquences de signal de défaut de quelques dizaines de Hz à au moins 1 kHz, avantageusement jusqu'à au moins 20 kHz, et préférentiellement jusqu'à au moins 100 kHz, ce second module 3' étant autonome en termes d'alimentation, et en particulier non dépendant de la tension du réseau ou du secteur, et délivrant conditionnellement son propre signal SC' de commande du moyen 11 de coupure ou d'ouverture. Ledit second module 3ʹ est alimenté par les signaux fournis par un enroulement de mesure 5ʺ formant enroulement secondaire d'un second tore 4ʹ lequel comporte un enroulement primaire formé par l'un au moins des conducteurs 2, 2ʹ, 2ʺ d'alimentation, et éventuellement le neutre N, et les deux modules 3 et 3ʹ sont séparés et arrangés de manière à constituer deux voies de détection, parallèles et mutuellement indépendantes, les domaines fréquentiels de fonctionnement opérationnel des deux modules 3 et 3ʹ précités étant préférentiellement partiellement chevauchants.

Afin de mettre en concurrence les deux modules 3 et 3ʹ, tout en exploitant leur complémentarité et en garantissant une détection unique et sans faille sur toute la plage de fréquences résultant de l'association des deux plages de fréquence propres aux deux modules 3 et 3ʹ, chacun d'entre eux présente avantageusement un fonctionnement prépondérant par rapport à l'autre des deux modules 3' et 3 sur des parties mutuellement complémentaires du domaine fréquentiel total de courants de défaut couvert par ledit dispositif 1.

Comme le montrent les figures 1 à 3, les deux modules de détection et de commande 3 et 3ʹ sont reliés, à leur sortie, par l'intermédiaire d'un circuit OU 13 à l'unique actionneur, relais ou moyen de coupure ou d'ouverture 11 du dispositif 1, le cas échéant par l'intermédiaire d'un étage de puissance 16.

Avantageusement, la zone de chevauchement Z des domaines fréquentiels de fonctionnement opérationnel des deux modules 3 et 3ʹ est subdivisée en deux zones fréquentielles complémentaires Zʹ et Zʺ adjacentes, dans chacune desquelles l'un des deux modules 3, 3ʹ présente respectivement une sensibilité et/ou une réactivité prépondérante, les sensibilités et/ou réactivités desdits modules 3, 3ʹ étant réglées de telle manière que la valeur de la fréquence de passage d'une zone de prépondérance à l'autre est au plus égale à la valeur de la fréquence du réseau surveillé, préférentiellement inférieure à cette dernière.

Préférentiellement, les deux modules 3 et 3ʹ fréquentiellement complémentaires sont configurés de telle manière que leurs courbes respectives C et C', de variation de la sensibilité en courant en fonction de la fréquence, présentent un point commun d'intersection PI, la valeur de la fréquence de ce point PI étant préférentiellement inférieure, et au plus égale, à la valeur de la fréquence du réseau surveillé ou du secteur.

Comme l'illustrent à titre d'exemples les figures 1 à 3, le module 3ʹ peut être du type AC/A, Hi/G ou F et comprendre une chaîne opérationnelle comportant notamment un circuit de filtrage à bande passante, un circuit quadrupleur, un circuit ou composant de stockage d'énergie et, enfin, un circuit de comparaison avec une référence.

Un dispositif 1 comprenant deux modules 3 et 3ʹ en parallèle et en concurrence est par exemple connu du document WO 2017/093670 de la demanderesse.

Le dispositif DDR selon l'invention peut par exemple consister en un dispositif de protection différentielle du type B ou B+ comprenant deux modules de détection indépendants 3 et 3ʹ et fonctionnant en concurrence mutuelle

Bien entendu, l'invention n'est pas limitée aux modes de réalisations décrits et représentés aux dessins annexés. Des modifications restent possibles, notamment du point de vue de la constitution des divers éléments ou par substitution d'équivalents techniques, sans sortir pour autant du domaine de protection de l'invention selon les revendications annexées.

## Revendications

1. Dispositif (1) de protection différentielle permettant la détection de courants de fuite ou de défaut dans une installation électrique alimentée soit par au moins deux conducteurs de phase d'un réseau (2, 2ʹ, 2ʺ), soit par au moins un conducteur de phase d'un réseau (2, 2ʹ, 2ʺ) et par un conducteur de neutre (N) dudit réseau,
ledit dispositif (1) comprenant au moins un module (3) de détection et de commande qui est fonctionnellement actif ou opérationnel pour des fréquences du signal de défaut de 0Hz à quelques dizaines de Hz, ce module (3) étant alimenté par le réseau,
ce module (3) comprenant, d'une part, un tore de mesure (4) en un matériau ferromagnétique traversé par les conducteurs précités (2, 2ʹ, 2ʺ, N), d'autre part, un circuit d'excitation (15) du tore (4) comportant un générateur de signaux alternatifs (6) produisant une porteuse périodique (SPE), et, enfin, un enroulement de mesure (5) apte et destiné à générer un signal de défaut (SD) résultant de l'apparition d'un défaut différentiel au niveau du réseau, ledit enroulement de mesure (5) étant relié à des circuits (7, 8, 9, 10) de traitement et d'évaluation du signal de défaut (SD) et d'émission d'un signal de commande (SC) pour un moyen (11) de coupure ou d'ouverture, faisant également partie du dispositif de protection différentielle (1), les circuits (7 à 10) précités formant les composantes d'une chaîne électronique opérationnelle (14) appartenant au module (3) de détection et de commande,
dispositif (1) **caractérisé en ce que** les circuits (7 à 10) de ladite chaîne opérationnelle (14) comprennent au moins, d'une part, un circuit (7) fournissant un signal (SVMR) correspondant à la valeur moyenne redressée du signal de défaut (SD), ou d'un signal dérivé (SD') directement dépendant de ce dernier, et, d'autre part, un circuit (8) comparant ledit signal moyen redressé (SVMR) à une valeur seuil prédéterminée ou préréglée et délivrant conditionnellement ou sélectivement un signal de commande (SC) du moyen (11) de coupure ou d'ouverture, en fonction du résultat de ladite comparaison.

2. Dispositif selon la revendication 1, **caractérisé en ce que** le circuit d'excitation (15) comprend également au moins une résistance (12) montée en série avec le générateur (6) de la porteuse périodique d'excitation (SPE), ledit signal d'excitation (SPE) étant appliqué au tore (4) par le biais soit de l'enroulement de mesure (5), soit d'un enroulement additionnel (5') distinct, formant enroulement primaire par rapport à l'enroulement de mesure (5).

3. Dispositif selon la revendication 1 ou 2, **caractérisé en ce que** la chaîne opérationnelle (14) du module (3) comprend également un circuit (9) de filtrage, du type passe-bas ou passe-bande, monté en amont du circuit (7) redresseur et moyenneur et configuré pour traiter le signal de défaut (SD) ou dérivé (SD') pour en extraire la composante du signal correspondant à la porteuse d'excitation (SPE).

4. Dispositif selon l'une quelconque des revendications 1 à 3, **caractérisé en ce que**, lorsque la chaîne opérationnelle (14) du module (3) de détection et de commande est reliée directement aux bornes de l'enroulement de mesure (5) et que ledit enroulement de mesure (5) sert à l'application du signal d'excitation périodique (SPE) par l'intermédiaire d'une résistance en série (12), ladite chaîne (14) comprend également un circuit soustracteur (10) monté entre le circuit (7) redresseur et moyenneur, d'une part, et le circuit (8) comparateur et fournisseur conditionnel du signal de commande (SC), d'autre part.

5. Dispositif selon l'une quelconque des revendications 2 et 3, **caractérisé en ce que** la chaîne opérationnelle (14) du module (3) de détection et de commande est alimentée par un signal dérivé (SD') qui est prélevé aux bornes de la résistance (12) montée en série avec l'enroulement de mesure (5).

6. Dispositif selon l'une quelconque des revendications 1 à 5, **caractérisé en ce qu'**il comprend également un second module (3') de détection et de commande qui est fonctionnellement actif ou opérationnel pour des fréquences de signal de défaut de quelques dizaines de Hz à au moins 1 kHz, avantageusement jusqu'à au moins 20 kHz, et préférentiellement jusqu'à au moins 100 kHz, ce second module (3ʹ) étant autonome en termes d'alimentation, et en particulier non dépendant de la tension du réseau ou du secteur, et délivrant conditionnellement son propre signal (SC') de commande du moyen (11) de coupure ou d'ouverture, **en ce que** ledit second module (3ʹ) est alimenté par les signaux fournis par un enroulement de mesure (5ʺ) formant enroulement secondaire d'un second tore (4') lequel comporte un enroulement primaire formé par l'un au moins des conducteurs (2, 2ʹ, 2ʺ) d'alimentation, et éventuellement le neutre (N), et **en ce que** les deux modules (3 et 3ʹ) sont séparés et arrangés de manière à constituer deux voies de détection, parallèles et mutuellement indépendantes, les domaines fréquentiels de fonctionnement opérationnel des deux modules (3 et 3ʹ) précités étant préférentiellement partiellement chevauchants.

7. Dispositif selon la revendication 6, **caractérisé en ce que** chacun des modules (3 et 3ʹ) présente un fonctionnement prépondérant par rapport à l'autre des deux modules (3ʹ et 3) sur des parties mutuellement complémentaires du domaine fréquentiel total de courants de défaut couvert par ledit dispositif (1).

8. Dispositif selon l'une quelconque des revendications 6 et 7, **caractérisé en ce que** les deux modules de détection et de commande (3 et 3ʹ) sont reliés, à leur sortie, par l'intermédiaire d'un circuit OU (13) à l'unique actionneur, relais ou moyen de coupure ou d'ouverture (11) du dispositif (1).

9. Dispositif selon l'une quelconque des revendications 6 à 8, **caractérisé en ce que** la zone de chevauchement (Z) des domaines fréquentiels de fonctionnement opérationnel des deux modules (3 et 3ʹ) est subdivisée en deux zones fréquentielles complémentaires (Zʹ et Zʺ) adjacentes, dans chacune desquelles l'un des deux modules (3, 3ʹ) présente respectivement une sensibilité et/ou une réactivité prépondérante, les sensibilités et/ou réactivités desdits modules (3, 3ʹ) étant réglées de telle manière que la valeur de la fréquence de passage d'une zone de prépondérance à l'autre est au plus égale à la valeur de la fréquence du réseau surveillé, préférentiellement inférieure à cette dernière.

10. Dispositif selon l'une quelconque des revendications 6 à 9, **caractérisé en ce que** les deux modules (3 et 3ʹ) fréquentiellement complémentaires sont configurés de telle manière que leurs courbes respectives (C et Cʹ), de variation de la sensibilité en courant en fonction de la fréquence, présentent un point commun d'intersection (PI), la valeur de la fréquence de ce point (PI) étant préférentiellement inférieure, et au plus égale, à la valeur de la fréquence du réseau surveillé ou du secteur.

11. Dispositif selon l'une quelconque des revendications 1 à 10, **caractérisé en ce qu'**il consiste en un dispositif de protection différentielle du type B ou B+ comprenant deux modules de détection indépendants (3 et 3ʹ) et fonctionnant en concurrence mutuelle.

## Patentansprüche

1. Differentialschutzvorrichtung (1), die die Detektion von Leck- oder Fehlerströmen in einer elektrischen Anlage gestattet, die entweder von mindestens zwei Phasenleitern eines Netzes (2, 2ʹ, 2ʺ) oder von mindestens einem Phasenleiter eines Netzes (2, 2ʹ, 2ʺ) und von einem Neutralleiter (N) des Netzes versorgt wird,
wobei die Vorrichtung (1) mindestens ein Detektions- und Steuermodul (3) umfasst, das für Frequenzen des Fehlersignals von 0 Hz bis einige Dutzend Hz funktionell aktiv oder funktionsfähig ist, wobei dieses Modul (3) vom Netz versorgt wird,
wobei dieses Modul (3) einerseits einen Messtorus (4) aus einem ferromagnetischen Material, der von den Leitern (2, 2ʹ, 2ʺ, N) durchquert wird, andererseits eine Erregungsschaltung (15) des Torus (4), die einen Wechselsignalgenerator (6) aufweist, die einen periodischen Träger (SPE) erzeugt, und schließlich eine Messwicklung (5), die dazu geeignet und bestimmt ist, ein Fehlersignal (SD) zu erzeugen, das aus dem Auftreten eines Differenzfehlers am Netz resultiert, aufweist, wobei die Messwicklung (5) mit Schaltungen (7, 8, 9, 10) zur Verarbeitung und Bewertung des Fehlersignals (SD) und Sendung eines Steuersignals (SC) für ein Trenn- oder Öffnungsmittel (11) verbunden ist, das ebenfalls Teil der Differentialschutzvorrichtung (1) ist, wobei die Schaltungen (7 bis 10) die Komponenten einer operationellen elektronischen Kette (14) bilden, die zum Detektions- und Steuermodul (3) gehören,
Vorrichtung (1) **dadurch gekennzeichnet, dass** die Schaltungen (7 bis 10) der operationellen Kette (14) mindestens einerseits eine Schaltung (7), die ein Signal (SVMR) liefert, das dem gleichgerichteten Mittelwert des Fehlersignals (SD) oder eines direkt abgeleiteten Signals (SD'), das von diesem abhängt, entspricht, und andererseits eine Schaltung (8), die das gleichgerichtete mittlere Signal (SVMR) mit einem vorbestimmten oder voreingestellten Schwellenwert vergleicht und bedingt oder selektiv ein Steuersignal (SC) des Trenn- oder Öffnungsmittels (11) je nach dem Ergebnis des Vergleichs liefert, umfassen.

2. Vorrichtung nach Anspruch 1, **dadurch gekennzeichnet, dass** die Erregungsschaltung (15) ebenfalls mindestens einen Widerstand (12) umfasst, der mit dem Generator (6) des periodischen Erregungsträgers (SPE) in Reihe geschaltet ist, wobei das Erregungssignal (SPE) entweder über die Messwicklung (5) oder eine gesonderte zusätzliche Wicklung (5'), die bezogen auf die Messwicklung (5) eine Primärwicklung bildet, an den Torus (4) angelegt ist.

3. Vorrichtung nach Anspruch 1 oder 2, **dadurch gekennzeichnet, dass** die operationelle Kette (14) des Moduls (3) ebenfalls eine Tiefpass- oder Bandpass-Filterschaltung (9) umfasst, die der Gleichrichtungs- und Mittelwertbildungsschaltung (7) vorgeschaltet ist und dazu ausgebildet ist, das Fehlersignal (SD) oder abgeleitete Signal (SD') zu verarbeiten, um daraus die Komponente des Signals zu extrahieren, die dem Erregungsträger (SPE) entspricht.

4. Vorrichtung nach einem der Ansprüche 1 bis 3, **dadurch gekennzeichnet, dass**, wenn die operationelle Kette (14) des Detektions- und Steuermoduls (3) direkt mit den Anschlüssen der Messwicklung (5) verbunden ist und die Messwicklung (5) der Anlegung des periodischen Erregungssignals (SPE) mittels eines Reihenwiderstands (12) dient, die Kette (14) ebenfalls eine Subtraktionsschaltung (10) umfasst, die zwischen die Gleichrichtungs- und Mittelwertbildungsschaltung (7) einerseits und die vergleichende und das Steuersignal (SC) bedingt liefernde Schaltung (8) andererseits geschaltet ist.

5. Vorrichtung nach einem der Ansprüche 2 und 3, **dadurch gekennzeichnet, dass** die operationelle Kette (14) des Detektions- und Steuermoduls (3) von einem abgeleiteten Signal (SD') versorgt wird, das an den Anschlüssen des Widerstands (12) abgegriffen wird, der mit der Messwicklung (5) in Reihe geschaltet ist.

6. Vorrichtung nach einem der Ansprüche 1 bis 5, **dadurch gekennzeichnet, dass** sie ebenfalls ein zweites Detektions- und Steuermodul (3') umfasst, das für Fehlersignalfrequenzen von einigen Dutzend Hz bis mindestens 1 kHz, vorteilhafterweise bis mindestens 20 kHz und vorzugsweise bis mindestens 100 kHz funktionell aktiv oder funktionsfähig ist, wobei dieses zweite Modul (3') versorgungsautonom und insbesondere nicht von der Spannung des Netzes oder Sektors abhängig ist und bedingt sein eigenes Signal (SC') zur Steuerung des Trenn- oder Öffnungsmittels (11) liefert, dadurch, dass das zweite Modul (3ʹ) von den Signalen versorgt wird, die von einer Messwicklung (5ʺ) geliefert werden, die eine Sekundärwicklung eines zweiten Torus (4ʹ) bilden, der eine Primärwicklung aufweist, die von mindestens einem der Versorgungsleiter (2, 2ʹ, 2ʺ) und eventuell dem Neutralleiter (N) gebildet ist, und dadurch, dass die zwei Module (3 und 3ʹ) getrennt sind und so angeordnet sind, dass sie zwei Detektionsspuren bilden, die parallel und gegenseitig unabhängig sind, wobei die Frequenzbereiche des operationellen Betriebs der zwei Module (3 und 3ʹ) vorzugsweise teilweise überlappend sind.

7. Vorrichtung nach Anspruch 6, **dadurch gekennzeichnet, dass** jedes der Module (3 und 3') einen vorherrschenden Betrieb im Vergleich zum anderen der zwei Module (3' und 3) auf gegenseitig komplementären Abschnitten des Gesamtfrequenzbereichs von Fehlerströmen, der von der Vorrichtung (1) abgedeckt wird, aufweist.

8. Vorrichtung nach einem der Ansprüche 6 und 7, **dadurch gekennzeichnet, dass** die zwei Detektions- und Steuermodule (3 und 3') an ihrem Ausgang mittels einer ODER-Schaltung (13) mit dem einzelnen Betätiger, Relais oder Trenn- oder Öffnungsmittel (11) der Vorrichtung (1) verbunden sind.

9. Vorrichtung nach einem der Ansprüche 6 bis 8, **dadurch gekennzeichnet, dass** der Überlappungsbereich (Z) der Frequenzbereiche des operationellen Betriebs der zwei Module (3 und 3') in zwei benachbarte komplementäre Frequenzzonen (Z' und Z") unterteilt ist, in denen jeweils eins der zwei Module (3, 3') eine vorherrschende Empfindlichkeit und/oder Reaktivität aufweist, wobei die Empfindlichkeiten und/oder Reaktivitäten der Module (3, 3') so eingestellt sind, dass der Wert der Durchlassfrequenz von einem Vorherrschaftsbereich zum anderen höchstens gleich dem Wert der Frequenz des überwachten Netzes, vorzugsweise niedriger als letzterer ist.

10. Vorrichtung nach einem der Ansprüche 6 bis 9, **dadurch gekennzeichnet, dass** die zwei frequenzkomplementären Module (3 und 3') so ausgebildet sind, dass ihre jeweiligen Kurven (C und C') der Änderung der Stromempfindlichkeit in Abhängigkeit von der Frequenz einen gemeinsamen Schnittpunkt (PI) aufweisen, wobei der Wert der Frequenz dieses Punks (PI) vorzugsweise unter und höchstens gleich dem Wert der Frequenz des überwachten Netzes oder Sektors ist.

11. Vorrichtung nach einem der Ansprüche 1 bis 10, **dadurch gekennzeichnet, dass** sie aus einer Differentialschutzvorrichtung vom Typ B oder B+ besteht, die zwei unabhängige und in gegenseitiger Konkurrenz arbeitende Detektionsmodule (3 und 3') umfasst.

## Claims

1. Differential protection device (1) allowing the detection of leakage or fault currents in an electrical installation that is supplied with power either by at least two phase conductors of a network (2, 2', 2'') or by at least one phase conductor of a network (2, 2', 2'') and by a neutral conductor (N) of said network,
said device (1) comprising at least one detection and control module (3) that is functionally active or operational for frequencies of the fault signal from 0 Hz to a few tens of Hz, this module (3) being supplied with power by the network,
this module (3) comprising, on the one hand, a measurement torus (4) made of a ferromagnetic material that the aforementioned conductors (2, 2', 2'', N) pass through, on the other hand, an excitation circuit (15) for exciting the torus (4) comprising a generator (6) of AC signals that produces a periodic carrier (SPE) and, finally, a measurement winding (5) that is able and intended to generate a fault signal (SD) resulting from the appearance of a differential fault in the network, said measurement winding (5) being connected to circuits (7, 8, 9, 10) for processing and evaluating the fault signal (SD) and for transmitting a control signal (SC) to a breaking or opening means (11) also forming part of the differential protection device (1), the aforementioned circuits (7 to 10) forming the components of an operational electronic chain (14) belonging to the detection and control module (3),
which device (1) is **characterized in that** the circuits (7 to 10) of said operational chain (14) comprise at least, on the one hand, a circuit (7) that delivers a signal (SVMR) corresponding to the rectified average value of the fault signal (SD), or a derived signal (SD') that is directly dependent on said fault signal, and, on the other hand, a comparator circuit (8) that compares said rectified average signal (SVMR) with a predetermined or preset threshold value and that conditionally or selectively delivers a control signal (SC) for controlling the breaking or opening means (11), depending on the result of said comparison.

2. Device according to Claim 1, **characterized in that** the excitation circuit (15) also comprises at least one resistor (12) that is connected in series with the generator (6) of the periodic excitation carrier (SPE), said excitation signal (SPE) being applied to the torus (4) via either the measurement winding (5) or a distinct additional winding (5') forming a primary winding with respect to the measurement winding (5).

3. Device according to Claim 1 or 2, **characterized in that** the operational chain (14) of the module (3) also comprises a low-pass or band-pass filtering circuit (9) that is connected upstream of the rectifying and averaging circuit (7) and that is configured to process the fault signal (SD) or derived signal (SD') in order to extract therefrom the component of the signal corresponding to the excitation carrier (SPE).

4. Device according to any one of Claims 1 to 3, **characterized in that**, when the operational chain (14) of the detection and command module (3) is connected directly to the terminals of the measurement winding (5) and when said measurement winding (5) serves for the application of the periodic excitation signal (SPE) via a series resistor (12), said chain (14) also comprises a subtractor circuit (10) that is connected between the rectifying and averaging circuit (7), on the one hand, and the comparator circuit (8) that conditionally delivers the control signal (SC), on the other hand.

5. Device according to either one of Claims 2 and 3, **characterized in that** the operational chain (14) of the detection and control module (3) is supplied with power by a derived signal (SD') that is drawn from the terminals of the resistor (12) that is connected in series with the measurement winding (5) .

6. Device according to any one of Claims 1 to 5, **characterized in that** it also comprises a second detection and control module (3') that is functionally active or operational for fault-signal frequencies from a few tens of Hz to at least 1 kHz, advantageously up to at least 20 kHz, and preferably up to at least 100 kHz, this second module (3') being autonomous in terms of power supply, and in particular not dependent on the voltage of the network or of the mains, and conditionally delivering its own signal (SC') for controlling the breaking or opening means (11), **in that** said second module (3') is supplied with power by the signals delivered by a measurement winding (5'') forming a secondary winding of a second torus (4') that includes a primary winding formed by at least one of the power supply conductors (2, 2', 2''), and possibly the neutral conductor (N), and **in that** the two modules (3 and 3') are separate and arranged so as to form two detection channels, which are parallel and mutually independent, the frequency ranges of functional operation of the aforementioned two modules (3 and 3') preferably overlapping partially.

7. Device according to Claim 6, **characterized in that** each of the modules (3 and 3') exhibits a predominant operation with respect to the other of the two modules (3' and 3) in mutually complementary portions of the total fault-current frequency range covered by said device (1).

8. Device according to either one of Claims 6 and 7, **characterized in that** the two detection and control modules (3 and 3') are connected, at their output, via an OR circuit (13) to the single actuator, relay or breaking or opening means (11) of the device (1).

9. Device according to any one of Claims 6 to 8, **characterized in** the overlapping region (Z) of the frequency ranges of functional operation of the two modules (3 and 3') is subdivided into two adjacent complementary frequency regions (Z' and Z''), in each of which regions one of the two modules (3, 3') exhibits a predominant sensitivity and/or reactivity, respectively, the sensitivities and/or reactivities of said modules (3, 3') being set in such a way that the value of the frequency of transition from one predominant region to the other is at most equal to the value of the frequency of the monitored network, and preferably lower than said value.

10. Device according to any one of Claims 6 to 9, **characterized in that** the two modules (3 and 3') that are complementary in terms of frequency are configured in such a way that their respective curves (C and C') of variation in current sensitivity as a function of frequency exhibit a shared intersection point (PI), the value of the frequency of this point (PI) preferably being lower than, and at most equal to, the value of the frequency of the monitored network or of the mains.

11. Device according to any one of Claims 1 to 10, **characterized in that** it consists of a type B or B+ differential protection device comprising two detection modules (3 and 3') that are independent and that operate in mutual competition.
